# EUROPEAN PATENT SPECIFICATION

(11) **EP 2 070 354 B1**
(45) Date of publication and mention of the grant of the patent: **25.07.2018**
(21) Application number: 06830375.9
(22) Date of filing: 05.12.2006
(51) Int. Cl.: H04M 3/22, H04W 12/02, H04L 29/06

(54) **SYSTEM, APPARATUS AND METHOD FOR LOCATION RELATED DATA INTERCEPTION**
SYSTEM, GERAT UND VERFAHREN ZUM ORTSBEZOGENEN DATENABFANG
SYSTÈME, DISPOSITIF ET PROCÉDÉ POUR INTERCEPTION DE DONNÉES LIÉES À UN EMPLACEMENT

(43) Date of publication of application: 17.06.2009
(73) Proprietor: Telefonaktiebolaget LM Ericsson (publ), 164 83 Stockholm (SE)
(72) Inventor: DE LUCA, Enrico, 81100 Caserta (IT); IMBIMBO, Amedeo, 80023 Caivano (IT); SESNIC, Tom, Niwot, Colorado 80503 (US)
(74) Representative: Brann AB
(86) International application number: PCT/EP2006/069326
(87) International publication number: WO 2008/067849

(56) References cited:
- EP-A- 1 460 876
- WO-A-98/46035
- WO-A-99/27716
- WO-A-99/66698
- CA-A1- 2 500 082

## Description

### Field of the Invention

The present invention relates generally to the lawful interception of electronic communications. More specifically, the present invention relates to lawful interception of electronic communications where the electronic communications are intercepted based upon the geographic location of user equipment associated with at least portion of the electronic communication.

### Background of the Invention

Lawful interception of electronic communications can be made based on knowledge of the identity of a party responsible for transmitting or receiving the communication. Once a party has been identified for electronic communication interception, any electronic communication made by that party may be subject to interception. For example, if a mobile telephone number of a criminal suspect is known, it is possible to intercept electronic communications - such as a telephone call - sent from or received by the criminal suspect's mobile telephone. In governments around the world, various law enforcement agencies may have the right to authorize this interception in their respective jurisdictions.

This identity-based interception of electronic communications is not without its drawbacks. In situations where a law enforcement agency has a geographically limited legal jurisdiction, it may be unlawful to intercept communications of a criminal suspect that crosses into another jurisdiction, such as another country, state, territory, county, province, or city. In these situations certain forms of location dependent electronic communication interception can be employed by the law enforcement community.

Location dependent electronic communication interception can intercept electronic communication from a suspect if the suspect is in a general interception area. This interception area is defined by one or more cells that form a subset of a network (such as a Public Lands Mobile Network) service area. Interception may then be restricted to communications made by the suspect inside the area defined by one or more cells that may correspond to a particular jurisdiction. Each cell covers an area served by a fixed transmitter called a base station, and the area covered by a single cell can be up to a few kilometers in diameter. Current location dependent electronic communication interceptions such as those described in publication WO2004/086793 and titled "A Monitoring Method Based on a Cell Location" can intercept a suspect's electronic communications when that suspect is identified as being located in a particular cell. The suspect's identifying information such as a mobile telephone number however may still be required, and the relatively large size of the cell can result in the interception of an excessive number of communications, which complicates investigations and data gathering, and intrudes on privacy rights of legal electronic communications that are unnecessarily intercepted.

This form of location dependent interception also has drawbacks. The general interception area must coincide with the entire area of at least one cell. It is not possible to determine where within the cell the suspect is located, to intercept communications from only a portion of one cell, to intercept all communications to or from an area that is a subset of a cell or that includes portions of two or more cells, or to intercept communications from a portion of each of two or more adjacent cells. Location dependent interception also requires the identification of a particular communications device such as a mobile telephone number that a particular suspect is using.

The current form of location dependent interception is insufficient in situations where a location specific threat is known, but the identity of the suspect is unknown. For example law enforcement agencies may be aware of a threat made against a specific location, such as a government building or downtown skyscraper that justifies monitoring all electronic communication into or out of the building, and not just communications involving a previously identified user. Existing location dependent monitoring is limited to monitoring known individuals who are in the range of the cell or cells that happen to cover that building and likely also much of the surrounding area. Furthermore it is not likely the building conforms to an exact cell area making it impossible to limit the intercept area to the exact building or other target area. This results in insufficient and inefficient interception, a waste of resources, and increased manpower to evaluate unnecessarily intercepted communications that take place outside the building of interest, but inside the corresponding cell area.

An unknown person or persons with criminal intent could infiltrate a specific geographic location such as a building for purposes of hostage taking, physical destruction of the building, espionage, or other harm to people or property. Existing location dependent interception is not capable of monitoring all electronic communications to or from any source in a specific location that may not be defined exactly by a cell or multi-cell area, while avoiding needless and intrusive interception of an entire cell or multi-cell area that expands beyond the specific location to target user equipment whose identifying characteristics may not be known.

Canadian Patent Application No. CA 2500082 describes a method and system for detecting and archiving location data based on location of a unique tracking signal periodically emitted for each of a plurality of wireless devices. Further, location data of the plurality of wireless devices is used to track movements of a particular wireless device which may be in vicinity of a sensitive/critical structure.

International Patent Application No. WO 99/66698 describes a method and an apparatus for providing location-based intercept in a system. The system includes an intercept monitoring unit for determining whether a user's call should be intercepted. The user's call is intercepted as a function of the user's location from a list of monitored locations.

European Patent Application No. EP 1460876 describes a method for location monitoring of a wireless unit by receiving a request for location information for the wireless unit and authorization by a requesting entity to obtain the location information.

### Summary of the Invention

From the foregoing, it is apparent there is a direct need for interception of data transmissions through a land based network where a person may have his or her communications intercepted based on the location of that person, while avoiding intercepting transmissions when the person is located in a different area. Further, it is desirable to intercept all communication into or out of a specified geographic location that is different from a single land based network cell area, while avoiding over broad interception of communications from an unnecessarily large geographic area. Thus, the aim of the present invention is to overcome the above mentioned problems by providing systems and methods related to geographic based interception of data transmission through a land based network. This improves law enforcement capability regarding security and surveillance operations, and increases the safety of the general public.

These problems and others are solved by intercepting data transmissions based at least in part on their geographic location. This allows an authorized entity such as a law enforcement agency to monitor and intercept data transmissions in a plurality of ways. These data transmissions are made with the assistance of a land based network such as any telecommunications land based network that covers the geographic area. The law enforcement agency can intercept all transmissions coming into or out of any specific geographic area, independent of the size of any cell areas of any telecommunications land based networks that the transmission is transmitted through. Interception is possible based on the location of a mobile station associated with a specific person known to be within the geographic area, or the proximity of a mobile station to another mobile station or identified object. The interception may include all transmission to or from the geographic area, even if the transmissions are to or from unknown parties.

Within this aim and in satisfaction of these needs, the present invention features a method, defined by independent claim 1, a system, defined by independent claim 13 and an article of manufacture, defined by independent claim 14, for geographic area based interception of data transmissions through a land based network. To increase efficiency and reduce cost, the systems and methods of the present invention may be compatible with existing wireless communication land based networks. Intercepting all transmissions associated with a particular geographic area as well as intercepting transmissions from a known mobile station only when that mobile station is located in the particular geographic area provides a robust solution to the challenges facing the law enforcement community regarding intelligence gathering, surveillance, public safety, and crime prevention operations.

Geographic based interception of a data transmission through a land based network involves receiving a command to intercept a transmission where the transmission is associated with a geographic area. The systems and methods identify the geographic area and detect one or more mobile stations in the geographic area. Transmissions involving any of these mobile stations can be detected and intercepted. For example this may include a phone call to or from a mobile telephone that is in the geographic area. This transmission may be detected and intercepted. Once intercepted, at least a portion of the transmission, or data associated with the transmission, may be transmitted to an authorized entity, such as a law enforcement monitoring facility. In this way it is possible to intercept all transmissions made to or from all mobile stations in the geographic area.

It is also possible to identify some or all of the mobile stations in the geographic area as targeted mobile stations, and to proceed to intercept transmissions placed to or made from the targeted mobile stations. Furthermore, it is possible to identify a reference object located in the geographic area. This may be a fixed or mobile physical object. Transmissions of a mobile station or targeted mobile station may be intercepted when the mobile station or target mobile station is located within a predetermined distance of the reference object. Additionally, a plurality of targeted mobile stations may be identified within the geographic area, and only transmissions occurring when the plurality of targeted mobile stations are within a predetermined distance of each other are intercepted. In certain embodiments, interception of a transmission is terminated if the mobile station or targeted mobile station exits the geographic area during transmission.

Other aspects and advantages of the present invention will become apparent from the following detailed description, taken in conjunction with the accompanying drawings, illustrating the principles of the invention by way of example only.

### Brief Description of the Drawings

The foregoing and other objects, features, and advantages of the present invention, as well as the invention itself, will be more fully understood from the following description of various embodiments, when read together with the accompanying drawings, in which:
Figure 1 is a flowchart depicting a method for geographic area based interception of data transmissions through a land based network in accordance with an embodiment of the invention;
Figure 2 is a block diagram depicting a system for geographic area based interception of data transmissions through a land based network in accordance with an embodiment of the invention;
Figure 3 is a block diagram depicting system intercept configuration in accordance with an embodiment of the invention;
Figure 4 is a block diagram depicting the transfer of a transmission to an authorized entity in accordance with an embodiment of the invention.

### Detailed Description

As shown in the drawings for the purposes of illustration, the invention may be embodied in systems and methods for geographic area based interception of data transmissions through a land based network. These systems and methods enable interception of all transmissions to or from any mobile station located in a geographic area. Embodiments of the invention allow interception of transmissions to or from specific targeted mobile stations within the geographic area, where the targeted mobile stations may be a subset of all of the mobile stations in the geographic area.

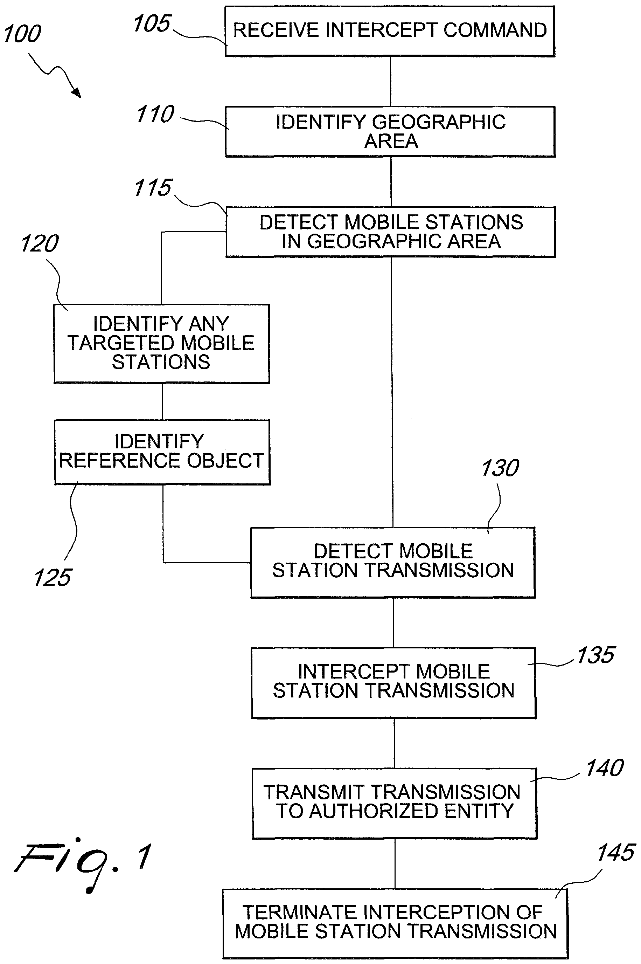

In brief overview, Figure 1 is a flowchart depicting a method 100 for geographic area based interception of data transmissions through a land based network in accordance with an embodiment of the invention. The method 100 includes a first step of receiving a command to intercept at least one transmission associated with at least one of a plurality of mobile stations located in a geographic area within an area covered by a land based network (STEP 105). The command to intercept a transmission may be in the form of a warrant authorizing an electronic wire tap that is issued by a competent tribunal. The command may be electronically, verbally, or manually received. The command may also be in the form of an electronic communication received by a third party. Receiving step (STEP 105) may include receiving any signal or indication authorizing or ordering the interception of a transmission associated with any mobile station while that mobile station is located in a geographic area. The transmission may include a wireless or electronic transmission from one point to another point.

Method 100 next includes the step of identifying the geographic area (STEP 110). Identifying the geographic area (STEP 110) typically includes identifying a geographic area with defined boundaries that may be different from or a subset of a land based network coverage area. Any standard telecommunication land based network generally has a coverage area. The land based network generally includes a plurality of base stations, and each base station has a certain range. The base station range is generally the sum of one or more cell coverage areas, where each cell coverage area is associated with a base station. The total area of all base station ranges generally forms the land based network coverage area. Identification step (STEP 110) may identify a geographic area that is a subset of a coverage area of a land based network through which the transmissions travel. This may include identifying a precise geographic area, such as a particular city block, or a piece of property owned by a particular individual. Identifying the geographic area (STEP 110) may include identifying a specific building.

As an illustrative example if method 100 receives a command (STEP 105) authorizing interception of all data transmissions into our out of a specific address, the geographic area corresponding to this address would be identified (STEP 110). Identification step (STEP 110) may include any form of global positioning, or may be based on an analysis of telecommunication land based network cell, micro-cell, or pico-cell areas, or a combination thereof. This address is typically identified (STEP 110) as a particular geographic area with discrete boundaries. The geographic area may be identified (STEP 110) as having the shape of a circle, ellipse, or polygon. In some embodiments, identification (STEP 110) of the geographic area may be set in method 100 via a Gateway Mobile Location Center associated with the land based network based at least in part on a Mobile Location Platform Trigger Location Reporting Request (MLP TLRR) message. Generally, the TLRR may set spatial conditions associated with a mobile station associated with a user, although these spatial conditions may be set in any manner and the TLRR is not required.

After delimiting a geographic area (STEP 110), method 100 typically includes the step of detecting at least one mobile station in the geographic area (STEP 115). This detection (STEP 115) of a mobile station can trigger monitoring of data transmissions associated with any detected mobile station while that station is in the geographic area. Detecting the mobile station or stations (STEP 115) may be accomplished by use of a positioning spatial triggers feature that allows a location services (LCS) client to define a geographic location (STEP 110) or spatial criteria for the presence of mobile stations. The Gateway Mobile Location Center generally monitors this area and reports the presence of any mobile stations to the Location Services Client.

Detecting at least one mobile station (STEP 115) may include detecting any number of mobile stations (or any user equipment) such as a mobile telephone or personal digital assistant as entering or leaving the geographic area. Method 100 is further capable of detecting a circumstance where two or more mobile stations are located within a predetermined distance from each other or from a reference object. This predetermined distance may be any distance, and may range between a few meters to a few kilometers.

The step of detecting a mobile station in the geographic area (STEP 115) may utilize a location services client message or other location information transmitted through the land based network from the Gateway Mobile Location Center to the Mobile Switching Center. The land based network may be a Global System for Mobile (GSM) communications network, or a wideband code division multiple access (WCDMA) network. In a GSM network, determining mobile station location within a cell (STEP 115) may include analysis of information that may indicate the Global Cell Identity (GCI) of a mobile station alone or in combination with a Timing Advanced (TA) value associated with the mobile station. The CGI generally indicates the cell in which the mobile station is located, and the TA value is generally an approximation of the time (typically in microseconds) that it takes for a signal from a mobile station to travel to a base station associated with the land based network and can be used to more precisely define the location of a mobile station in a geographic area within a cell coverage area or overlapping more than one cell coverage areas, where the cell coverage areas are associated with the land based network.

In a WCDMA network, determining a mobile station location (STEP 115) may include analysis of Service Area Identity (SAI) positioning information. In a network such as a GSM or WCDMA network, determining step (STEP 115) is capable of determining the location of any mobile station within a defined geographic area. This defined geographic area may be smaller, larger, or different from a cell coverage area associated with the network that encompasses the area, and the defined geographic area may overlap more than one cell. In this way a plurality of mobile stations may be identified (STEP 115) in an area that is less than the smallest cell coverage area provided by the nearest base station associated with the land based network. This location information is generally received by the Mobile Switching Center, and may be time stamped and stored in the Gateway Mobile Location Center associated with the land based network. The positioning information related to the location of the mobile stations may be received in real time by means of ordinary intercept related information during traffic activities of a mobile station.

There are a variety of events that can trigger detection (STEP 115) of a mobile station. For example, detecting a mobile station located in the geographic area (STEP 115) may include detecting a telephone call placed from or received by a mobile station, (which may be a mobile telephone) in the geographic area. Detecting a mobile station in the geographic area (STEP 115) may also include detecting a text message (also called a short message or SM) transmitted or received through the land based network by a mobile station while that mobile station is located in the geographic area. Additionally detecting step (STEP 115) may include detecting a periodic location update transmission sent to or from a mobile station where the mobile station is informing an associated land based network of its location. Detecting step (STEP 115) may also include obtaining mobile station positioning when pre-defined conditions known as spatial triggers are fulfilled, such as a mobile station entering or leaving a particular geographic area. Detecting which base station a mobile station is camped to may also assist in detecting the geographic location in which the mobile station is located (STEP 115).

Method 100 may also include identifying at least one mobile station as a targeted mobile station (STEP 120). Typically, identifying a targeted mobile station (STEP 120) includes positively classifying one of the mobile stations detected in the geographic area (STEP 115) as a targeted mobile station. The targeted mobile station may be a mobile station with a known identity whose transmissions may be intercepted. Identifying characteristics of a targeted mobile station, such as an associated phone number, may assist in identification of a targeted mobile station (STEP 120).

Method 100 may also include identifying at least one reference object (STEP 125). This may include identification of any object in the geographic area, and the location of the reference object itself is generally determined or made known. Identification (STEP 125) may be made by any means. For example, the reference object may transmit a signal to the land based network. Alternatively, the reference object may be a physical structure at a known location or with known coordinates, and the land based network may determine or otherwise be made aware of this location. The distance of any mobile station from this reference object may then be tracked, and may form criteria upon which interception is based.

Method 100 is capable of detecting a transmission associated with any of the plurality of mobile stations (including targeted mobile stations) in the geographic area (STEP 130). This may include detecting a telephone call or text message placed from or intended for any mobile station or targeted mobile station in the geographic area. Detecting a transmission (STEP 130) may occur at any point in the land based network through which the transmission passes.

After detecting a transmission (STEP 130) method 100 proceeds by intercepting the transmission at an intercept access point as the transmission passes through the land based network (STEP 135). Generally, intercepting the transmission (STEP 135) may occur at any time as the transmission passes through the land based network. Intercepting the transmission (STEP 135) may include any form of accessing, duplicating, copying, replicating, recording, or diverting the transmission during or after its transmission to or from a mobile station that is located in the geographic area. This may include electronic interception of the transmission. Intercepting the transmission (STEP 135) generally does not prohibit the transmission from reaching its intended recipient, and none of the intended parties are typically aware of the interception. It is however possible in an alternate embodiment for method 100 to prohibit the transmission from reaching its intended destination.

In various embodiments, intercepting the transmission (STEP 135) may include intercepting other information such as content data associated with the transmission. Content data may include a telephone number associated with any mobile station whose transmission is being intercepted, a date of transmission, a time of transmission, the geographic location of a mobile station associated with the transmission, or data identifying any party to the transmission. Content data may be integral to or associated with the transmission itself and may include intercept related information.

Method 100 further includes the step of transmitting at least a portion of the transmission to at least one authorized entity (STEP 140). In various embodiments, all or a portion of the transmission and any associated call content data may be transmitted to an authorized entity. Generally transmitting step (STEP 140) includes transmission by any means. For example, the transmission may be electronic, wired, wireless, by any form of a hard copy print out that is then transmitted or delivered to an authorized entity, or data stored in an electronic medium that is then transmitted or delivered to a recipient. The contents of the transmission may be converted into a different medium than the medium by which it was transmitted. For example, the transmission may be an audio file, but the portion of the transmission that is transmitted may include a transcript of the audio file. In other embodiments, transmitting (STEP 140) the transmission may be made in the same medium as the transmission was transmitted through the land based network. Transmitting (STEP 140) may include use of an antenna or transmitter, and generally includes outputting the intercepted transmission in any medium in any manner so that the transmission or an indication of its contents is directed to an authorized entity.

Method 100 may also include terminating interception of the transmission when a mobile station associated with the transmission exits the geographic location (STEP 145). This may include a transmission involving at least one mobile station, at least one target mobile station, or any combination of the two. Generally, interception terminates (STEP 145) when the any mobile station or targeted mobile station associated with the transmission exits the geographic area. In some embodiments, interception of the transmission may be terminated (STEP 145) as soon as method 100 detects that a mobile station associated with (i.e., transmitting or receiving) the transmission leaves the geographic area. For example, if the geographic area is a building, the interception may be terminated (STEP 145) when a person using a mobile station such as a mobile telephone exits the building. In some embodiments, interception of any transmission associated with a mobile station in the geographic area that begins while the mobile station is in the geographic area may continue even if the mobile station exits the geographic area during the transmission. In an illustrative embodiment a warrant may be considered activated upon receipt of intercept command (STEP 105). At this time method 100 may create a snapshot list of all mobile stations in the geographic area identified by identifying step (STEP 110). Method 100 may then detect when any of the listed mobile stations enters or leaves the geographic area.

In some embodiments, any combination of receiving a command to intercept a transmission (STEP 105), identifying the geographic area (STEP 110), detecting a mobile station in the geographic area (STEP 115), identifying a mobile station as a targeted mobile station (STEP 120), identifying at least one reference object (STEP 125), detecting a transmission associated with any of the plurality of mobile stations (including targeted mobile stations) in the geographic area (STEP 130), intercepting the transmission at an intercept access point as the transmission passes through the land based network (STEP 135), transmitting at least a portion of the transmission to an authorized entity (STEP 140), and terminating interception of the transmission when a mobile station is located outside the geographic area (STEP 145), may be implemented by a computer, which is generally a device with a central processing unit with sufficient processing power to be programmed to perform these and other operations.

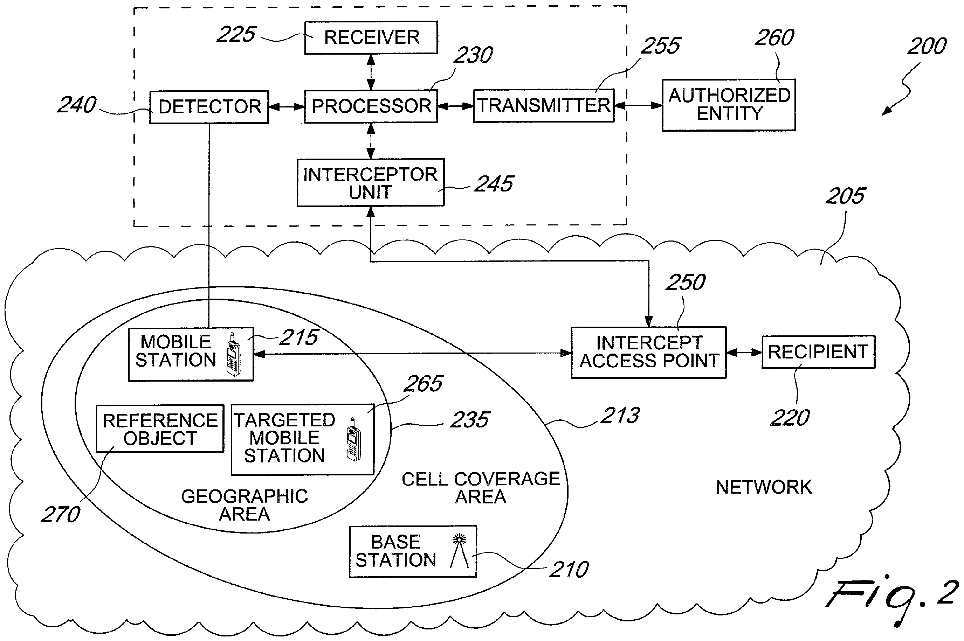

In brief overview, Figure 2 is a block diagram depicting a system 200 for geographic area based interception of data transmissions through a land based network in accordance with an embodiment of the invention. System 200 generally interacts with a land based network 205. Generally, land based network 205 may include any standardized communication network operable on any of the Third Generation Partnership Project (3GPP), European Telecommunications Standards Institute (ETSI), American National Standards Institute (ANSI) or other standard telecommunication network architecture such as the 3GPP TS 33.107 "Lawful Interception Architecture and Functions" (Release 6) standard, the 3GPP TS 33.108 "Handover Interface for Lawful Interception" (Release 6) standard, or the 3GPP TS 23.032 "Universal Geographical Area Description (GAD) (Release 6) standard.

In certain embodiments, land based network 205 includes a Global System for Mobile communications (GSM) network. The GSM network may include General Packet Radio Service (GPRS) high speed packet switching technology. In other embodiments, land based network 205 includes a Wideband Code Division Multiple Access (WCDMA) or Code Division Multiple Access (CDMA) network, either of which may also be referred to as a Universal Mobile Telecommunication System (UMTS) standard network. In various embodiments, land based network 205 may include a local area network (LAN), wide area network (WAN), the Internet, or an Intranet. Land based network 205 may include any land based network compatible with a Third Generation Partnership Project (3GPP) specifications, and may be fixed, mobile, or digital. Generally, land based network 205 enables data transmission to or from a mobile station. The data transmissions over land based network 205 may include any type of data, such as audio, text, images, or video, for example, and may be encoded and decoded at various times during transmission.

Land based network 205 generally comprises at least one base station 210. Base station 210 is generally a radio transceiver attached to a fixed antenna associated with land based network 205 for mobile to mobile (MS-MS) or other communications. Base station 210 may act as an interface between land based network 205 and mobile stations within range of base station 210 to enable a data transmission to or from a mobile station. Base station 210 is typically associated with at least one cell coverage area 213. Generally, cell coverage area 213, also called cell 213, is the area given radio coverage by base station 210. In other words, cell coverage area 213 is generally the range of base station 210 within which data transmissions involving base station 210 may take place through land based network 205. Although only one cell coverage area 213 is shown, in various embodiments one or more cell coverage areas 213 may combine to form the range of base station 210. Cell coverage area 213 may be identified via a cell global identity (CGI) number assigned to each cell coverage area 213. A plurality of cell coverage areas 213 may partially overlap with each other and the total area covered by all cell coverage areas generally defines the range of land based network 205.

System 200 depicted by Figure 2 also generally includes at least one mobile station 215. Mobile station 215 may include any user equipment such as a wireless telephone such as a mobile or cellular telephone, a personal digital assistant, (PDA) palmtop, or any wireless communication device. Mobile station 215 generally transmits as output and receives as input signals such as audio or data signals, such as human speech or text messages. Mobile station 215 is typically a portable device that may be carried by a user of the mobile station into the area covered by land based network 205 or cell coverage area 213.

Mobile station 215 may send or receive a transmission through land based network 205 to or from recipient 220. Mobile station 215 is generally associated with a person or entity that initiates or receives a transmission, such as a data transmission, through land based network 205 to recipient 220. Recipient 220 is generally a person or entity with a telephone or other communication device to which the call is placed. In various embodiments recipient 220 may receive or initiate the transmission. Recipient 220 may use a cellular telephone, conventional land line telephone, PDA, or may transmit or receive communication by other means, such as for example through an Internet VoIP service. In embodiments utilizing VoIP services and a computer that is generally capable of playing audio files to a listener, for example by use of speakers, and also receiving audio files from an operator, such as words spoken into the computer by means of a headset or microphone.

System 200 generally includes a receiver 225 associated with a processor for receiving a command to intercept at least one transmission associated with at least one mobile station 215 located in a geographic area 235. Generally, receiver 225 is any device capable of receiving or accepting incoming signals, data, or commands. Receiver 225 may be a component of a computer or other device used to implement system 200. Alternately, receiver 225 may be a stand alone device capable of both receiving and transmitting commands or data. Generally, receiver 225 may receive a command to intercept any transmission including any associated call content data to or from mobile station 215 when mobile station 215 is present in geographic area 235. Receiver 225 may receive a command directly entered into receiver 225 by, for example, a human operator.

In various embodiments a human operator may input into receiver 225 a command to intercept a transmission such as a telephone call to or from mobile station 215 based at least in part on the geographic location of mobile station 215. Generally, the command stems from a search warrant issued by a government or authorized institution authorizing interception of a transmission. In various embodiments, this command may be communicated directly from the authorized institution to receiver 225. In alternate embodiments, the command may be communicated by an intermediary, such as a human operator who receives the command from an authorized source, and then inputs the command to system 200 via receiver 225.

System 200 also includes at least one processor 230. Generally, processor 230 is any logic device capable of data manipulation, such as a microprocessor chip capable of data processing. In various embodiments processor 230 may be included as a central processing unit of a computer. Processor 230 is generally capable of identifying a user identity associated with mobile station 215, such as the owner of a mobile telephone. A user identity includes characteristics capable of uniquely identifying any particular user. For example, a subscriber identity may include an account number, a telephone number, or other similar information. Processor 230 generally receives as input from receiver 225 the command to intercept a transmission associated with mobile station 215 while mobile station 215 is located in geographic area 235.

In a typical embodiment, receiver 225 receives a command to intercept at least one transmission associated with at least one mobile station 215 when mobile station 215 is located in geographic area 235. Geographic area 235 is typically a discretely defined area within land based network 205 coverage area. Geographic area 235 may correspond to the real property boundaries associated with an address, for example. Geographic area 235 may include a particular building or compound, such as an office building, airport, diplomatic compound, detention facility, military base, or any secured location without including significant portions of the surrounding area. In various embodiments, geographic area 235 may be a circular, oval, elliptical, or polygonal in shape. Geographic area 235 may be a subset of a single cell coverage area 213, or geographic area 235 may overlap multiple cell coverage areas 213. Continuing, geographic area 235 may be enveloped by the nearest cell coverage area 213, such that geographic area 235 is less than cell coverage area 213. In other words, cell coverage area 213 may include all or part of geographic area 235, as well as other areas that are not part of geographic area 235. Geographic area 235 may be identified by processor 230 or associated components.

Geographic area 235 may be identified in the intercept command received by receiver 225. In an illustrative embodiment upon receipt of the intercept command such as a warrant by receiver 225, known as start activation time of the warrant, geographic area 235 may be set in a Gateway Mobile Location Center (GMLC) associated with processor 230 via a Mobile Location Platform Trigger Location Reporting Request (MLP TLRR) message. This typically marks the initiation of Triggered Location Reporting regarding geographic area 235 and may include spatial triggers to identify any mobile station 215 entering or leaving geographic area 235. Upon termination or stop activation time of the warrant, these spatial triggers may be removed from the GMLC.

In a typical embodiment, upon receipt of a Triggered Location Reporting Mobile Location Platform (TLREP MLP) message from the GMLC that notifies system 200 that mobile station 215 has entered geographic area 235, any detected transmissions to or from that mobile station 215 may be intercepted while that mobile station 215 is location in geographic area 235. TLREP message generally includes any of a target identity identifying one or more mobile stations 215, a point in time when location information was received regarding any mobile station 215, or a location estimate of the location of any mobile station 215. Continuing with this illustrative embodiment, upon receipt of a TLREP MLP message from the GMLC indicating that mobile station 215 has exited geographic area 235, interception of any transmissions associated with mobile station 215 that is the subject of the TLREP MLP message may be deactivated or otherwise terminated.

System 200 also typically includes at least one detector 240. Detector 240 is generally associated with processor 230 for detecting one or more mobile stations 215 that are located in geographic area 235. Detector 240 also may detect transmissions associated with mobile stations 215. Detector 240 generally monitors land based network 205 or equipment associated with land based network 205, such as base station 210 or mobile station 215 for transmissions to or from any mobile station 215 that is located in geographic area 235. Detector 240 may detect transmissions from multiple mobile stations 215 located in geographic area 235 at any given time. Alternately, detector 240 may detect transmissions from a single mobile station 215 in geographic area 235.

In an illustrative embodiment a warrant may be considered activated when an intercept command is received by receiver 225. At this time processor 230 may create a snapshot list of all mobile stations 215 in geographic area 235. Detector 240 may then detect when any of mobile stations 215 on the snapshot list enter or leave geographic area 235. These detections may then be processed by processor 230 to determine if transmissions associated with a particular mobile station 215 should be intercepted.

Generally, detector 240 directly or indirectly communicates with land based network 205 associated with mobile station 215 to determine the existence of at least one transmission associated with mobile station 215. In certain embodiments, this determination is made with the assistance of a Home Location Register (HLR) or Visitor Location Register (VLR) associated with land based network 205. In various embodiments, other land based network 205 components may be queried to make this determination. Detector 240 may detect any of mobile stations 215 by detecting calls or text messages made from or received by mobile stations 215 or a periodic locate update message made by mobile stations 215 or land based network 205 to update the location of mobile station 215.

The detection of one or more mobile stations 215 located in geographic area 235 by detector 240 may be referred to as the spatial triggers positioning function of system 200. Generally, spatial trigger conditions relate to the terms of the intercept command (i.e., a warrant) and may include conditions such as the entrance of mobile station 215 into geographic area 235. Mobile station 215 may have its location determined by system 200 when the specified trigger conditions such as entrance of mobile station 215 into geographic area 235 are reported as fulfilled in a TLREP message sent by the GMLC. In various embodiments this spatial trigger condition may occur at predetermined time intervals. For example the location of mobile station 215 may be determined every 10, 15, or 20 minutes. Generally any time interval may be used to position mobile stations 215.

Spatial trigger conditions to determine mobile station 215 location may also be specified with a list of telephony events such as originating call attempts, sending or receiving text messages (also called short messages). In these illustrative embodiments the location of mobile stations 215 may become known to system 200 as long as the specified spatial trigger conditions, (such as mobile station 215 location in geographic area 235) are fulfilled when one of these telephony events occurs. Spatial trigger conditions may also be specified based on the location of two or more mobile stations 215 relative to each other. In this situation the location of mobile stations 215 may become known to system 200 if the specified trigger condition is fulfilled, i.e., that the two trigger conditions are within a predetermined distance of each other. In this illustrative embodiment the predetermined distance has been set as a spatial trigger criterion that, when satisfied, activates interception of a transmission.

Generally, specified trigger conditions may be set in the GMLP using a MLP message sequence at a warrant activation time. The specified trigger conditions may be removed from the GMLP using a MLP message sequence at a warrant activation stop time that may be expressed in a time/date format. A TLREP message from the GMLC may report the fulfillment of spatial trigger conditions enabling the commencement of the interception of transmissions associated with the mobile stations 215 that have fulfilled the spatial trigger conditions by, for example, being located within geographic area 235.

System 200 also generally includes an interceptor unit 245 that may intercept a transmission associated with mobile station 215 while mobile station 215 is located in geographic area 235. Interceptor unit 245 is generally responsible for interacting with land based network 205 and processor 230 to intercept a transmission as it is transmitted through land based network 205 to or from mobile station 215 while mobile station 215 is in geographic area 235. Interceptor unit 245 may also intercept call content data that is associated with or part of the transmission. Interceptor unit 245 may be an integral part of processor 230, and interceptor unit 245 may include a logic device capable of connecting with the land based network to facilitate the interception of the transmission. In various embodiments, interceptor unit 245 is an interface between system 200 and land based network 205. Interceptor unit 245 is generally capable of intercepting, and transmitter 255 is generally capable of transmitting any signal in any format including audio, video, or picture files compatible with land based network 205 such as coded human speech, a text message, a date of transmission, a time of transmission, a location of transmission, or data identifying a source or intended recipient of the transmission.

Interceptor unit 245 generally intercepts a transmission at an intercept access point 250 as the transmission passes through land based network 205. Generally, as a transmission such as a telephone call is routed through land based network 205 to or from mobile station 215 while mobile station 215 is located in geographic area 235, the transmission is routed through an area of land based network 205 where it is susceptible to authorized interception. This portion of land based network 205 where the transmission is susceptible to interception, such as a node, is known as intercept access point 250. Generally intercept access point 250 forms part of the interface between land based network 205 and system 200. This is typically the location where system 200 interacts with land based network 205 to intercept the transmission. In some embodiments, intercept access point 250 may be a Mobile Switching Services Center (not shown), a Gateway Mobile Switching Services Center (not shown), a Personalized Gateway Mobile Switching Services Center (not shown), or a LCS server. These mobile switching services centers may all be associated with land based network 205 and generally may handle incoming calls to land based network 205 where the incoming calls are arriving from external networks.

Once a transmission has been intercepted by interceptor unit 245 at intercept access point 250, the transmission may be transmitted by at least one transmitter 255 to at least one authorized entity 260. Typically, transmitter 255 sends or transmits the transmission to authorized entity 260. In certain embodiments, transmitter 255 may transmit content data or other intercept related information associated with or part of the transmission. Transmitter 255 generally is capable of transmitting the intercepted transmission in any manner. This may include electronic, wired, or wireless transmission, as well as transmitting a coded transmission. Transmitter 255 may transmit the intercepted transmission in any medium, including a medium different from the original transmission medium. In certain embodiments, transmitter 255 is capable of transmitting audio, picture, or video signals. In an alternate embodiment, transmitter 255 may include a printer for printing the contents of the intercepted transmission, where the printed contents are then transmitted to authorized entity 260. In various embodiments transmitter 255 may include a separate device for transmitting. In other embodiments, transmitter 255 may be included in the same device as processor 230, receiver 225, detector 240 or interceptor unit 245. In some embodiments, any combination of receiver 225, processor 230, detector 240, interceptor unit 245, and transmitter 255 may be included in a single device, such as a computer.

Authorized entity 260 is generally the agency or person authorized to receive the intercepted transmission. Authorized entity 260 is typically not recipient 220. Generally, the authorization for authorized entity 260 to receive an intercepted transmission is granted by a government or governmental organization. In some embodiments, authorized entity 260 may be the entity that sent the initial command, received by receiver 225, to intercept a transmission. Generally, authorized entity 260 is external to system 200 and transmitter 255 acts as the interface between system 200 and authorized entity 260. However, in various embodiments, authorized entity 260 may be included in system 200.

In some embodiments, authorized entity 260 may include at least one law enforcement agency or law enforcement monitoring facility. In various embodiments, there may be more than one authorized entity 260, and in some embodiments multiple authorized entities 260 are not aware of each others existence. Multiple authorized entities 260 may also receive different portions of the transmission or different content data associated with the transmission. Authorized entity 260 may also include a monitoring center designed to receive at least one transmission whose contents may be monitored, typically by trained or authorized personnel. Authorized entity 260 is generally able to receive any content data associated with the transmission. In various embodiments upon receipt by a component of system 200 such as receiver 225 of a TLREP MLP message indicating that mobile station 215 has either entered or exited geographic area 235, a stand-alone Intercept Related Information (IRI) report may be transmitted to authorized entities 260 informing them of that a trigger criterion has been met by at least one of mobile stations 215.

In certain embodiments involving telephone communications to or from mobile station 215, Intercept Related Information (IRI, or Events) are necessary at the beginning of a call, the end of a call, for all supplementary services during a call, and for information that is not call associated. Events may be call related or non-call related and may generally include any content data related to the transmissions (such as date, time, or location), as well as the content of the transmissions themselves. If there is an Event to or from mobile station 215, interceptor unit 245 intercepts the transmission or associated data, which is then sent by system 200 to authorized entity 260. System 200 is also capable of intercepting transmissions in a Packet Switching (PS) domain.

In various embodiments, processor 230 may identify at least one of the plurality of mobile stations 215 as one or more targeted mobile stations 265. Targeted mobile stations 265 are generally a subset of mobile stations 215, and thus everything disclosed herein regarding mobile stations 215 is applicable to targeted mobile stations 265. Typically, transmissions associated with targeted mobile stations 265 are subject to interception when targeted mobile stations 265 are located in located in geographic area 235. Targeted mobile stations 265 are typically mobile stations 215 that have been specifically identified in the command to intercept at least one transmission received by receiver 225. Targeted mobile stations 265 may be uniquely identified by their telephone number, MSISDN number, the identity of a user associated with targeted mobile station 265, or any other identifier. In some embodiments any mobile station 215 whose identifying information is known may be considered to be a targeted mobile station 265.

In embodiments including at least one targeted mobile station 265, system 200 components identify at least one of mobile stations 215 as targeted mobile station 265, and interceptor unit 245 may intercept any transmission associated with targeted mobile station 265 while targeted mobile station 265 is located in geographic area 235. Further embodiments may include interceptor unit 245 terminating interception of the transmission associated with targeted mobile station 265 when targeted mobile station 265 is located outside geographic area 235. Generally, interceptor unit 245 may terminate interception of any mobile station 215 or targeted mobile station 265 that travels outside geographic area 235. This may include terminating interception of a transmission that is in progress as mobile station 215 or targeted mobile station 265 exits geographic area 235. Alternately, any transmission originating while mobile station 215 or targeted mobile station 265 is inside geographic area 235 may continue to be intercepted as mobile station 215 or targeted mobile station 265 exits geographic area 235. In this alternate embodiment, transmissions originating while either mobile station 215 or targeted mobile station 265 are located outside geographic area 235 may not be intercepted.

In some embodiments, processor 230 may identify a first targeted mobile station (not shown) and a second targeted mobile station (not shown). Typically at least one of these two targeted mobile stations is located in geographic area 235. The first and second targeted mobile stations are typically a subset of mobile stations 215, and in this embodiment, interceptor unit 245 may intercept a transmission originating from or received by the first or second targeted mobile stations when one of them is located in geographic area 235. In a further embodiment, the distance between the first and second targeted mobile stations must be less than a predetermined distance for interception to occur.

Processor 230 or associated components may also identify at least one reference object 270. Reference object 270 may include one or more objects with a known location within geographic area 235 or one or more of mobile stations 215. Reference objects 270 may be fixed or mobile. Typically, interceptor unit 245 may then intercept a transmission associated with any of mobile stations 215 or targeted mobile stations 265 such as first targeted station or second targeted station, when any of these stations is located within a predetermined distance of reference object 270.

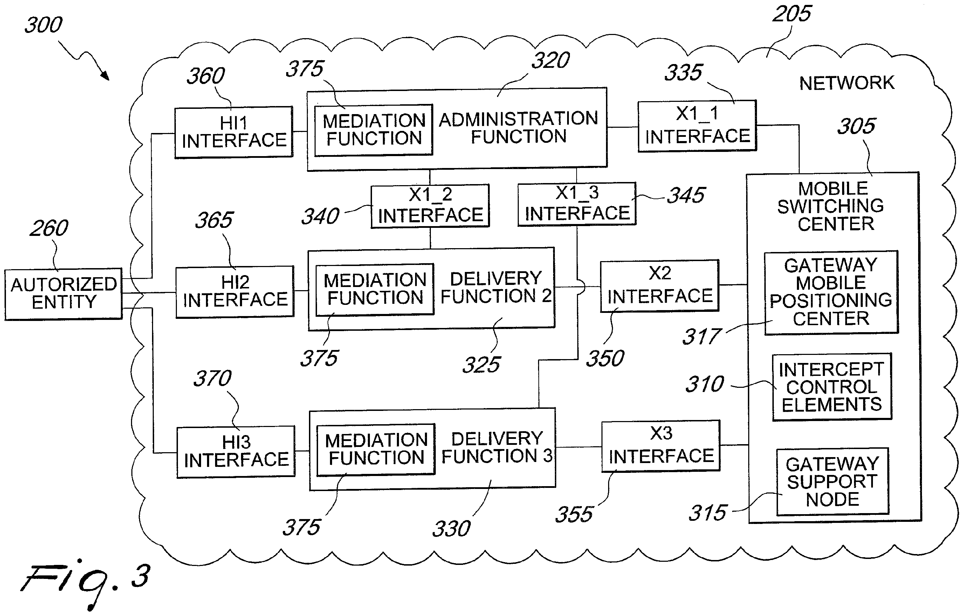

In brief overview figure 3 is a block diagram representing a system 300 intercept configuration for lawful interception of transmissions in accordance with an embodiment of the invention. System 300 may include at least one Third Generation Mobile Switching Center (MSC) (305). Mobile Switching Center 305 may include a Gateway Mobile Switching Center (GMSC) (not shown). The GMSC may include a Mobile Station International ISDN Number (MSISDN), International Mobile Equipment Identity (IMEI) data or International Mobile Subscriber Identity (IMSI) data.

Mobile Switching Center 305 may also be called a network switching subsystem and is generally a component of land based network 205 that carries out switching functions and manages communications between mobile stations 215 and land based network 205. MSC 305 typically monitors and may intercept transmissions into or out of geographic area 235. In various embodiments MSC 305 detects transmissions associated with geographic area 235 using information received from a Global Cell Identity (GCI) of mobile station 215 or Service Area Identity (SAI) positioning information received during normal traffic signaling. In some embodiments Mobile Switching Center 305 may act as Intercept Control Elements (ICE) 310, which are generally the components participating in the interception of a transmission to or from mobile stations 215. Intercept Control Elements 310 may include, act as, or be associated with interceptor unit 245 and Intercept Access Point 250.

Either Mobile Switching Center 305 or Intercept Control Elements 310 may include at least one Gateway Support Node 315. Gateway Support Node 315 is generally an interface between land based network 205 and another network, such as the Internet or an external packet data network. Gateway Support Node 315 typically converts packet data protocol formatted address information from an external network to the GSM address associated with mobile stations 215. In various embodiments Gateway Support Node 315 may act as interceptor unit 245 or intercept access point 350. Gateway Support Node 315 may also act as a Gateway General Packet Radio Service Support Node (GGSN) (not shown) or a Serving General Packet Radio Service Support Node (SGSN) (not shown). Furthermore, in some embodiments Mobile Switching Center 305 may act as intercept access point 250.

System 300 may also include a Gateway Mobile Positioning Center (GMPC) 317, which is generally a network node element that may obtain positioning information be means of a MLP protocol (not shown) that generally interfaces with Administration Function 320. GMPC 317 may be a land based network 205 node element that is separate from MSC 305. GMPC 317 may include spatial trigger criteria such as mobile stations 215 entering or leaving geographic area 235, or satisfying any other predefined criteria. If these criteria are satisfied a MLP TLRA message may be received by receiver 225, processor 230 or associated components indicating fulfillment of these criteria. This generally activates the received command (i.e., warrant) and transmission interception may begin. At the warrant activation stop time, GMPC 317 may send a MLP TLRSR message and receive a MLP TLRSA message. In alternate embodiments, a TLRR message may be sent that includes a stop time parameter that states when the trigger criterion is to be removed from GMPC 317. This stop time parameter may be expressed in a time/date format.

Generally, for each fulfilled trigger criterion, GMPC 317 may transmit a Triggered Location Report (TLREP) message reporting the identity (e.g., MSISDN) of any of mobile stations 215 for which the trigger criterion was fulfilled. GMPC 317 may also transmit the point of time when the latest subscriber data associated with one of mobile stations 215 including location information was received for any mobile station 215 whose identity has been previously reported. GMPC 317 may also report a location estimate specifying the geographic location of any of mobile stations 317. System 300 may then generate an Intercept Related Information report with the received user identities that satisfy the spatial triggers criteria (e.g., that are located in geographic area 235). In various embodiments, GMPC 317 may report to processor 230 or authorized entity 260 a list of mobile station 215 identities within or outside geographic area 235.

Generally upon receipt of a TLREP MLP message from GMPC 317 indicating that mobile subscriber 215 entered geographic area 235, that mobile station 215 may be monitored and any transmissions associated with that mobile station 215 may be intercepted. Upon receipt of a TLREP MLP message from GMPC 317 indicating that mobile subscriber 215 has exited geographic area 235 monitoring and interception of that mobile station 215 may be deactivated or terminated. Typically when mobile station 215 enters or exits geographic area 235 an Intercept Related Information report may be generated and forwarded to authorized entity 260.

Land based network 205 generally includes at least one Administration Function (ADMF) (320), at least one Delivery Function II (DF II) 325 and at least one Delivery Function III (DF III) 330. Administration Function 320 generally interfaces with authorized entities 260, DF II 325, DF III 330, and Mobile Switching Center (MSC) 305, for example. Although any suitable interface may be used, the interface between ADMF 320 and MSC 305 may include X1_1 interface 335. The interface between ADMF 320 and DF II 325 may include X1_2 interface 340, and the interface between ADMF 320 and DF III 330 may include X1_3 interface 345. Similarly, DF II 325 may interfaces with MSC 305 via X2 interface 350 and DF III 330 may interface with MSC 305 via X3 interface 355. Any interface with MSC 305 generally may also include an interface with ICE 310 or GSN 315. ADMF 320 may include or be associated with one or more of receiver 225, processor 230, detector 240, interceptor unit 245, or transmitter 255.

Each of Administration Function (ADMF) 320, Delivery Function II (DF II) 325 and Delivery Function III (DF III) may also interface with authorized entity 260. In an illustrative embodiment, ADMF 320 may interface with authorized entity 260 via HI1 interface 360, DF II 325 may interface with authorized entity 260 via HI2 interface 365, and DF III 330 may interface with authorized entity 260 via HI3 interface 365. Each of ADMF 320, DF II 325, and DF III 330 may include or otherwise be associated with at least one mediation function 375. Mediation functions 375 generally convert data on HI1 interface 360 HI2 interface 365 and HI3 interface 370 into a format compatible with authorized entity 260 and national laws, regulatory, or industry requirements.

In embodiments including more than one authorized entity 260, ADMF 320 may act to keep the intercept activities of each individual authorized entity 260 separate. ADMF 320 may be partitioned to ensure appropriate separation of the intercepted transmissions between different authorized entities 260. In situations with more than one authorized entity 260, one authorized entities 260 may not be aware of the existence of another authorized entity 260.

DF II 325 and DF III 330 typically receive intercept related information, such as a transmission or content data from MSC 305 or any of its associated components such as ICE 310 or GSN 315 and forwards them to authorized entity 260. Generally, DF II 325 and DF III 330 may prevent multiple authorized entities 260 from becoming aware of each others existence.

ADMF 320 generally enables multiple interceptions of mobile station 215 transmissions to be forwarded to a plurality of authorized entities 260, such as different law enforcement agencies. ADMF 320 may act to ensure that interceptor unit 245 only intercepts authorized information at intercept access point 250. For example, ADMF may be used to ensure separation of content data from different authorized entities 260 in the event different authorized entities 260 are only authorized to receive specific content data. In certain embodiments, land based network 205 may have multiple intercept access points 250. In some embodiments, one interceptor unit 245, which may include any of MSC 305, ICE 310, GSN 315, or GMPC 317 may be used to intercept a transmission destined for multiple authorized entities 260. In this illustrative embodiment, processor 230, which may include any of ADMF 320, DF II 325, or DF III 330 in conjunction with transmitter 255 distribute the proper intercepted transmission or portion thereof to the proper authorized entity 260 so that each authorized entity 260 receives only the portion of the transmission or associated content data that authorized entity 260 is allowed to receive. In various embodiments, ADMF 320 may interact with system 200 to regulate content data related to at least one of the subscriber identity, the address for delivery of intercepted information such as authorized entity 260 address, the subset of information which is to be delivered, a unique second delivery function activation identity that uniquely identifies the activation for a second intercept command, the intercept activation, and a warrant reference number, if required.

In an embodiment where a transmission is intercepted by Intercept Control Elements 310, DF II 325 generally distributes Intercept Related Information (IRI) from Intercept Control Element (ICE) 310 to authorized entity 260 via HI2 interface 365. DF III 330 generally distributes content data such as content data from Intercept Control Element (ICE) 310 to authorized entity 260 via HI3 interface 370. Content data may include data related to the date, time, length, or location of the transmission, for example. ADMF 320 may transmit any portion of the transmission including intercept related information from ICE 310 to authorized entity 260 via HI1 interface 360.

Intercept related information may include the address for delivery of the intercept related information (generally information identifying the authorized entity such as an authorized entity address), data indicating which subset of information is to be delivered to authorized entity 260, a DF II 325 activation identity that uniquely identifies the activation for DF II 325 and may be used for further interrogation, interception, deactivation, or a warrant reference number. A transmission may include intercept related information, and Intercept related information may be integral to or otherwise associated with the transmission.

Intercept related information, events, or content data may or may not be directly related to a transmission such as a phone call. This intercept related information may be transmitted to authorized entity 260 at the beginning or end of a transmission session such as a phone call, for any supplementary services during the phone call, as well as data that may not be associated with the call session.

In a general illustrative embodiment, authorized entity 260 may submit a command to intercept various transmissions. This may be in the form of a warrant. The warrant may describe a target area such as geographic area 235, as well as an identity of one or more targeted mobile stations 265. Targeted mobile stations 265 may be identified based upon their unique MSISDN numbers. Various other trigger criterion or conditions may also be specified in the warrant, such as a command to intercept transmissions from two targeted mobile stations 265 when they are within a predetermined distance from each other, such as 50 meters, or a request for periodic positioning of mobile stations within a specified area such as cell coverage area 213 or for mobile stations 215 that have been identified based on their MSISDN numbers, during predetermined time intervals. These predetermined time intervals may be every 30 minutes, or every 180 minutes, for example. Any other predetermined time intervals may be possible. The criteria in the warrant may be received by receiver 225, which is generally associated with processor 230 which may include administration function 320. At this point the warrant may be considered activated. Intercept Control Elements 310 and associated components may be notified of this activation.

Continuing with this illustrative embodiment, Administration Function (ADMF) 320 and associated components may then send a Trigger Location Reporting Request (TLRR) message to GMPC 317 that sets the specified trigger conditions. ADMF 320 may also request a report of any mobile stations 215 entering or leaving geographic area 235. This may be accomplished via a Triggered Location Reporting Request (TLRR) message sent to any of MSC 305, ICE 310, GSN 315, GMPC 317, or interceptor unit 245.

If, for example, a request for periodic positioning of any mobile stations 215 every 30 minutes has been made, ADMF 320 may send a positioning request to GMPC 317, which generally responds with an answer locating the relevant mobile stations 215. DF II 325 may transmit this positional data to authorized entity 260.

In this illustrative embodiment, it may be GMPC 317 that responds to ADMF 320 with a Trigger Reporting Location Answer (TRLA) message generally indicating results of the trigger condition setting. When the trigger conditions (i.e. trigger criteria) is fulfilled, such as when two targeted mobile stations 265 are within 50 meters of each other, or when mobile station 215 enters geographic area 235, a Triggered Location Report (TLREP) message may be transmitted from GMPC 317 to ADMF 320. ADMF 320 may then send a TLREP message to DF II 325, and DF II 325 may then transmit an Intercept Related Information (IRI) report to authorized entity 260. The IRI report may include IRI or other data regarding the satisfaction of the trigger conditions, the location of mobile stations 215 or targeted mobile stations 265, as well all or part of any intercepted transmission or content data.

Continuing, in this illustrative embodiment mobile stations 215 may have been detected in geographic area 235. These mobile stations may be identified based on the unique MSISDN associated with each mobile station 215. Generally, ADMF 320 commands ICE 310 to intercept any transmissions to or from these detected mobile stations 215. Any intercepted transmissions or content data is then forwarded, typically via one or more of ADMF 320, DF II 325 or DF III 330 to authorized entity 260. If one of mobile stations 215 leaves geographic area 235, GMPC 317 may transmit a report to ADMF 320. ADMF 320 may then transmit a report to DF II 325, which then may generate and transmit an IRI report that may be forwarded through HI2 interface 365 to authorized entity 260. In embodiments where one of mobile stations 215 has left geographic area 235, a command to terminate or deactivate interception of that particular mobile station 215 may be transmitted from ADMF 320 to ICE 310.

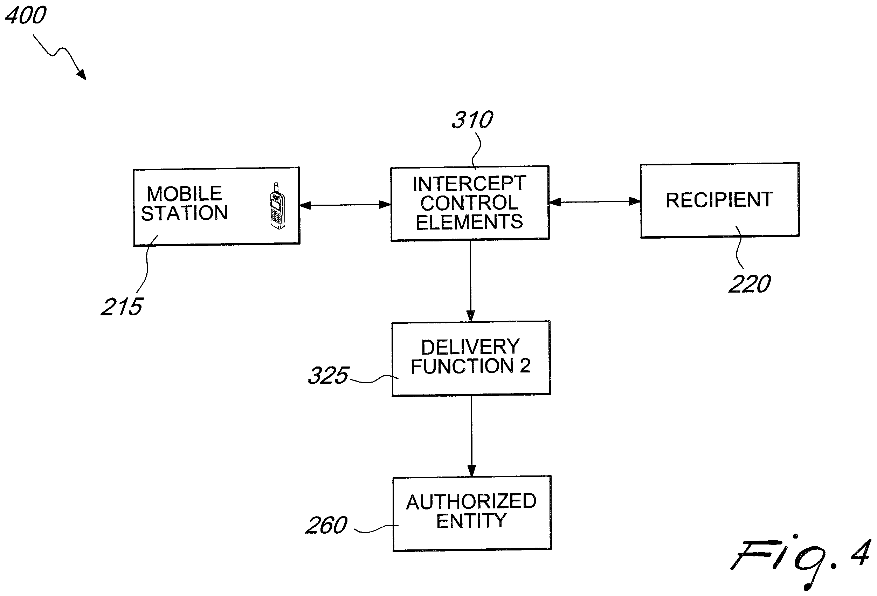

In brief overview figure 4 is a block diagram depicting a system 400 for the transfer of a transmission to an authorized entity, which may include a law enforcement monitoring facility in accordance with an embodiment of the invention. This may include the transfer of intercept related information. In system 400, intercept control elements 310 intercept a transmission such as a phone call from mobile station 215 to recipient 220. It is noted that recipient 220 is not necessarily always the party receiving the transmission. In various embodiments the transmission may originate from recipient 220 and be intended for mobile station 215. Intercept control element 310 intercepts a transmission between mobile station 215 and recipient 220. ICE 310 then forwards at least a portion of the intercepted transmission or intercept related information to DF II 325, which then passes the forwarded data to authorized entity 260. The interception related information may include the transmission itself, a portion thereof, or any associated content data. System 400 generally functions in a similar manner in both a circuit switching and packet switching domains.

In embodiments where land based network 205 includes a Global Services for Mobil Communications (GSM) network, the determination of the location of mobile stations 215 within geographic area 235 may be based at least in part on the Global Cell Identity (GCI) of mobile station 215 alone or in combination with a Timing Advance (TA) value associated with mobile station 215. A Timing Advance value generally corresponds to a step change in an approximation of the number of microseconds a signal from mobile station 215 requires to travel to base station 210. This generally gives an indication of the distance between mobile station 215 and base station 210. In embodiments where land based network 205 includes a Wideband Code Division Multiple Access (WCDMA) network, the determination of the location of mobile stations 215 within geographic area 235 may be based at least in part on Service Area Identity (SAI) positioning. In various embodiments other positioning systems and methods may be used, such as assisted Global Positioning Systems.

In these illustrative embodiments the location of mobile station 215 may be accurately determined within geographic area 235. In other words, in these illustrative embodiments, mobile station 215 is not simply identified as being within cell coverage area 213 or geographic area 235, but may be identified with precision at a location within these areas. For example, where cell coverage area includes a city block and geographic area 235 is a building located within that city block, mobile station 215 may be identified as being located in the southeast corner of the building.

The location of mobile station 215 may also become known when mobile station 215 receives a short message (SM) or text message. Location information associated with a SM may be received by a Gateway Mobile Location Center (GMLC) associated with land based network 205. In some embodiments a Type 0 SM, which is generally invisible to a user of mobile station 215 is periodically sent to mobile station 215 to execute a forced update of the location of mobile station 215. In the event a Type 0 SM is visible to the user, the user may become aware that mobile station 215 is being positioned.

Spatial triggers based positioning generally allows a location services client to define spatial criteria and to monitor it for criteria that triggers interception of one or more transmissions. For example geographic area 235 may be monitored for the entrance or exit of mobile station 215, for a plurality of mobile stations within a predetermined distance from each other, for transmissions such as phone calls or SMS to or from mobile stations 215 in geographic area 235, or for any periodic location updates sent by one of mobile stations 215. In various embodiments, mobile station 215 positioning or geographic area 235 determination may be based on part on Mobile Terminated Location Request (MT-LR) positioning or Mobile Originated Location Request (MO-LR) positioning.

In some embodiments a location services (LCS) client may provide positioning and geographic data to a Gateway Mobile Location Center associated with land based network 205. The LCS may provide parameters such as the Mobile Station International ISDN Number (MSISDN) to the GMLC. The MSISDN is generally the telephone number of a GSM mobile telephone. It is generally stored in the Subscriber Identity Module (SIM) card inside the mobile telephone. The LCS may also provide the GMLC with geographic area 235, as well as trigger criterion that may trigger interception of a transmission, such as any of mobile stations 215 entering or leaving geographic area 235, a plurality of mobile stations 215 being located within a predetermined distance from each other, the amount of time mobile station 215 has been present in geographic area 235, the time mobile station 235 exited geographic area 235, the speed with which mobile station 215 is traveling through geographic area 235, horizontal accuracy of mobile station 215 position, or a recurrence parameter that allows the LCS client to have a trigger criteria recur after a specified time after a trigger criteria is fulfilled. In embodiments where this parameter is omitted the trigger criteria may be removed after fulfillment of the criteria. Furthermore, GMLC may generate billing information related to spatial triggering usage.

Generally, if a trigger criterion is fulfilled, authorization exists to intercept transmissions to or from mobile stations 215 located in geographic area 235. For example, trigger criteria may be defined so that when any mobile station 215 is inside a building any transmissions to or from those mobile stations 215 are intercepted. A signaling procedure generally reports trigger location status to determine if the trigger criteria have been met so that interception may commence. In an illustrative embodiment, the GMLC may obtain a Trigger Location Reporting Request (TLRR) message from the LCS client containing data related to the trigger criteria. If the content of the TLRR message is correct and valid, the GMLC may store the trigger criteria and send a Trigger Location Reporting Answer (TLRA) message to the LCS client. The TLRA typically includes a request identity that identified the trigger criteria internally in the GMLC.

Triggered location reporting generally terminates when the GMLC obtains a Trigger Location Reporting Stop Request (TLRSR) message from the LCS client containing information about what trigger criterion to remove. The GMLC may then verify the identity of the LCS client and may also verify that the GMLC is authorized to remove the trigger criteria. In such a case, the GMLC may remove the trigger criteria and send a Trigger Location Reporting Stop Answer (TLRSA) message to the LCS client that includes a request for the identity of the removed trigger criteria.

Triggered location reporting generally includes mobile station 215 reporting its location to land based network 205 or associated components. For example, this may occur when mobile station 215 such as a mobile telephone makes a telephone call, receives a SM or activates a supplementary service, such as the Internet or e-mail. Generally, when a Subscriber Location Report (SLR) message including subscriber data and location information of mobile station 215 is received, the GMLC determines if any active trigger criteria associated with mobile station 215 is not fulfilled. For each fulfilled criteria, the GMLC any send a Triggered Location Report (TLREP) message to the LCS client that defined the trigger criteria. In this illustrative embodiment the trigger criteria may be fulfilled based on detection of mobile station 215 within geographic area 235 and any transmissions associated with that mobile station 215 may occur as long as the trigger criteria remains fulfilled (i.e., as long as mobile station 215 remains in geographic area 235).

The location of mobile stations 215 may also be passively collected to determine if criteria have been fulfilled that would initiate location based monitoring of mobile stations 215. For example, this passive collection may commence when mobile station 215 makes a telephone call, receives an SMS, or activates a supplementary service. Generally these events cause mobile switching center 305 to send a Subscriber Location Report MAP message to the GMLC. This message generally contains location information and subscriber data associated with mobile station 215.

In addition to passive collection, the location of mobile stations 215 may be actively collected in a forced location update procedure. Generally, when the GMLC considers the location information it currently has related to mobile station 215 to be outdated, the GMLC initiates a forced location update by sending a short message to mobile station 215. This typically allows the GMLC to collect updated location information from mobile stations 215 at predetermined time intervals or generally as needed. Forced location updates generally proceed with MSC 305 paging mobile station 215 in order to deliver the short message. The GMLC typically receives a response message that indicates the short message was successfully delivered to the intended mobile station 215. When MSC 305 has delivered the short message it also generally sends a Subscriber Location Report MAP message to the GMLC that includes location information and subscriber data associated with mobile station 215.

These triggered location reporting services may be used to track the geographic location of a plurality of mobile stations 215 to determine when any of mobile stations 215 are present in geographic area 235. Typically, triggers that cause this geographic location to become known include periodic reporting at predetermined time intervals, any activity by mobile subscribers 215 such as sending or receiving any transmissions, or changes in area of mobile stations 215 that may occur when mobile station 215 enters cell coverage area 213 from a different cell coverage area.

A message reporting the location of mobile stations 215 may commence after a predetermined time interval without receiving location information, or upon any predefined actions of mobile stations 215, such as sending or receiving transmissions. Once triggered, generating location reporting messages may include any combination of a triggered location reporting request, a triggered location reporting answer, a triggered location report, a triggered location reporting stop request, or a triggered location reporting stop answer. The triggered location reporting service generally includes a triggered location reporting request followed by a triggered location reporting answer or a triggered location report. The triggered location reporting service may include a triggered location reporting stop request that may be followed by a triggered locations reporting stop answer. In some embodiments a triggered location reporting stop answer may be sent without a preceding triggered location reporting stop request. In the event land based network 205 ceases location reporting, the stop reporting information may be included in a triggered location report, and a triggered location reporting stop answer may be sent without a preceding triggered location reporting stop request.

Note that in Figures 1 through 4, the enumerated items are shown as individual elements. In actual implementations of the invention, however, they may be inseparable components of other electronic devices such as a digital computer. Thus, actions described above may be implemented in software that may be embodied in an article of manufacture that includes a program storage medium. The program storage medium includes data signals embodied in one or more of a carrier wave, a computer disk (magnetic, or optical (e.g., CD or DVD, or both), non-volatile memory, tape, a system memory, and a computer hard drive.

From the foregoing, it will be appreciated that the systems and methods provided herein afford simple and effective way to intercept mobile station transmissions based at least in part on the geographic location of the mobile stations 215. The systems and methods according to embodiments described herein are able to identify geographic areas that may not correspond to land based network cell coverage areas. This increases accuracy and efficiency, allows interception of transmissions from a well delineated geographical area based at least in part on mobile stations entering or leaving that area, and lowers operational expenditures by executing unique interception commands within geographic areas and not necessarily based on known or identified mobile stations.

## Claims

1. A method for geographic area (235) based interception of data transmissions through a land based network (205), **characterized by**:
receiving a command to intercept at least one transmission associated with at least one of a plurality of mobile stations (215) located in a geographic area (235) within an area covered by the land based network (205);
identifying the geographic area (235), wherein the geographic area (235) is an area that overlaps a portion of at least two cell coverage areas (213) associated with at least one base station (210) corresponding to the land based network (205), and wherein the geographic area (235) is less than each of the at least two cell coverage areas (213);
detecting the plurality of mobile stations (215), each of the plurality of mobile stations (215) located in the geographic area (235);
detecting a transmission associated with the at least one of the plurality of mobile stations (215) in the geographic area (235);
intercepting the transmission at an intercept access point (250) as the transmission passes through the land based network (205); and
transmitting at least a portion of the transmission to at least one authorized entity (260).

2. The method of claim 1, further comprising:
identifying at least one of the plurality of mobile stations (215) as a targeted mobile station (265) located in the geographic area (235), wherein intercepting the transmission comprises intercepting a transmission associated with the targeted mobile station (265) while the targeted mobile station (265) is located in the geographic area (235); and
terminating the interception of the transmission associated with the targeted mobile station (265) when the targeted mobile station (265) is located outside the geographic area (235).

3. The method of claim 1 further comprising:
identifying, from the plurality of mobile stations (215), a first targeted mobile station (265) and a second targeted mobile station (265),
wherein intercepting the transmission comprises intercepting a transmission associated with at least one of the first targeted mobile station (265) and the second targeted mobile station (265) while at least one of the first targeted mobile station (265) and the second targeted mobile station (265) is located in the geographic area (235), and while the distance between the first targeted mobile station (265) and the second targeted mobile station (265) is less than a predetermined distance.

4. The method of claim 1, further comprising:
identifying, from the plurality of mobile stations (215), a first targeted mobile station (265); and
identifying a reference object (270) located in the geographic area (235),
wherein intercepting the transmission comprises intercepting a transmission associated with the first targeted mobile station (265) when the first targeted mobile station (265) is located in the geographic area (235) and when the first targeted mobile station (265) is located within a predetermined distance of the reference object (270).

5. The method of claim 1, further comprising:
terminating interception of the transmission upon detection of at least one of the plurality of mobile stations (215) associated with the transmission exiting the geographic area (235).

6. The method of claim 1 wherein the geographic area (235) is associated with at least one of an airport, a diplomatic compound, a detention facility, a military base, and a secured location.

7. The method of claim 1 wherein detecting the plurality of mobile stations (215) comprises at least one of detecting a call made from at least one of the plurality of mobile stations (215), detecting a call received by at least one of the plurality of mobile stations (215), detecting a text message sent from at least one of the plurality of mobile stations (215), detecting a text message received by at least one of the plurality of mobile stations (215), and detecting a periodic location update made by at least one of the plurality of mobile stations (215).

8. The method of claim 7 wherein detecting the periodic location update comprises receiving location information from a mobile switching center (305).

9. The method of claim 1 wherein detecting the transmission comprises detecting the transmission as originating from any of the plurality of mobile stations (215) detected in the geographic area (235).

10. The method of claim 1 wherein detecting the transmission comprises detecting the transmission as being received by any of the plurality of mobile stations (215) detected in the geographic area (235).

11. The method of claim 1 wherein intercepting the transmission comprises intercepting at least one of encoded human speech, a text message, a date of transmission, a time of transmission, a location of transmission, data identifying a source of the transmission, and data identifying an intended recipient (220) of the transmission, and
wherein transmitting the transmission to the at least one authorized entity (260) comprises transmitting at least one of the encoded human speech, the text message, the date of transmission, the time of transmission, the location of transmission, the data identifying a source of the transmission, and the data identifying an intended recipient (220) of the transmission.

12. The method of claim 1 wherein transmitting at least a portion of the transmission to the at least one authorized entity (260) includes transmitting at least a portion of the transmission to at least one law enforcement monitoring facility.

13. A system for geographic area (235) based interception of data transmissions through a land based network (205), **characterized by**:
a receiver (225) associated with a processor (230) for receiving a command to intercept at least one transmission associated with at least one of a plurality of mobile stations (215) located in a geographic area (235) within an area covered by the land based network (205);
the processor (230) identifying the geographic area (235), wherein the geographic area is an area that overlaps a portion of at least two cell coverage areas (213) associated with at least one base station (210) corresponding to the land based network (205), and wherein the geographic area (235) is less than each of the at least two cell coverage areas (213);
a detector (240) associated with the processor (230) for detecting the plurality of mobile stations (215) located in the geographic area (235);
the detector (240) detecting a transmission associated with the at least one of the plurality of mobile stations (215) in the geographic area (235);
an interceptor unit (245) intercepting the transmission at an intercept access point (250) as the transmission passes through the land based network (205); and
a transmitter (255) for transmitting at least a portion of the transmission to at least one authorized entity (260).

14. An article of manufacture comprising a program storage medium having computer readable program code embodied therein for geographic area (235) based interception of data transmissions through a land based network (205), the computer readable program code in the article of manufacture **characterized by**:
computer readable code for causing a computer to receive a command to intercept at least one transmission associated with at least one of a plurality of mobile stations (215) located in a geographic area (235) within an area covered by the land based network (205);
computer readable code for causing the computer to define the geographic area (235), wherein the geographic area is an area that overlaps a portion of at least two cell coverage areas (213) associated with at least one base station (210) corresponding to the land based network (205), and wherein the geographic area (235) is less than each of the at least two cell coverage areas (213);
computer readable code for causing the computer to detect the plurality of mobile stations (215), each of the plurality of mobile stations (215) located in the geographic area (235);
computer readable code for causing the computer to detect a transmission associated with the at least one of the plurality of mobile stations (215) in the geographic area (235);
computer readable code for causing the computer to intercept the transmission at an intercept access point (250) as the transmission passes through the land based network (205); and
computer readable code for causing the computer to transmit at least a portion of the transmission to at least one authorized entity (260).

## Patentansprüche

1. Verfahren zum auf einem geographischen Bereich (235) basierenden Abfangen von Datenübertragungen durch ein landseitiges Netzwerk (205), **gekennzeichnet durch**:
Empfangen eines Befehls zum Abfangen von wenigstens einer Übertragung, die mit wenigstens einer von einer Vielzahl von Mobilstationen (215) assoziiert ist, die sich in dem geographischen Bereich (235) innerhalb eines Bereichs befindet, der von dem landseitigen Netzwerk (205) abgedeckt wird;
Identifizieren des geographischen Bereichs (235), wobei der geographische Bereich (235) ein Bereich ist, der einen Abschnitt von wenigstens zwei Zellabdeckungsbereichen (213) überlappt, die mit wenigstens einer Basisstation (210) assoziiert sind, die dem landseitigen Netzwerk (205) entspricht, und wobei der geographische Bereich (235) kleiner ist als jeder der zwei Zellabdeckungsbereiche (213);
Detektieren einer Vielzahl von Mobilstationen (215), wobei sich jede der Vielzahl von Mobilstationen (215) in dem geographischen Bereich (235) befindet;
Detektieren einer Übertragung, die mit wenigstens einer der Vielzahl von Mobilstationen (215) in dem geographischen Bereich (235) assoziiert ist;
Abfangen der Übertragung an einem Abfangzugriffspunkt (250), wenn die Übertragung das landseitige Netzwerk (205) durchquert; und
Übertragen von wenigstens einem Abschnitt der Übertragung an wenigstens eine autorisierte Instanz (260).

2. Verfahren nach Anspruch 1, ferner umfassend:
Identifizieren von wenigstens einer von einer Vielzahl von Mobilstationen (215) als eine angezielte Mobilstation (265), die sich in dem geographischen Bereich (235) befindet, wobei ein Abfangen der Übertragung ein Abfangen einer Übertragung umfasst, die mit der angezielten Mobilstation (265) assoziiert ist, während die angezielte Mobilstation (265) sich in dem geographischen Bereich (235) befindet; und
Beenden des Abfangens der Übertragung, die mit der angezielten Mobilstation (265) assoziiert ist, wenn die angezielte Mobilstation (265) sich außerhalb des geographischen Bereichs (235) befindet.

3. Verfahren nach Anspruch 1, ferner umfassend:
Identifizieren einer ersten angezielten Mobilstation (265) und einer zweiten angezielten Mobilstation (265) von der Vielzahl der Mobilstationen (215),
wobei ein Abfangen der Übertragung ein Abfangen einer Übertragung umfasst, die mit wenigstens einer von der ersten angezielten Mobilstation (265) und der zweiten angezielten Mobilstation (265) assoziiert ist, während wenigstens eine von der ersten angezielten Mobilstation (265) und der zweiten angezielten Mobilstation (265) sich in der geographischen Bereich (235) befindet, und während die Distanz zwischen der ersten angezielten Mobilstation (265) und der zweiten angezielten Mobilstation (265) geringer ist als eine vorbestimmte Distanz.

4. Verfahren nach Anspruch 1, ferner umfassend:
Identifizieren einer ersten angezielten Mobilstation (265) von der Vielzahl von Mobilstationen (215); und
Identifizieren eines Referenzobjekts (270), das sich in dem geographischen Bereich (235) befindet,
wobei das Abfangen der Übertragung ein Abfangen einer Übertragung umfasst, die mit der ersten angezielten Mobilstation (265) assoziiert ist, wenn die erste angezielte Mobilstation (265) sich in dem geographischen Bereich (235) befindet, und wenn die erste angezielte Mobilstation (265) sich innerhalb eines vorbestimmten Abstands zu dem Referenzobjekt (270) befindet.

5. Verfahren nach Anspruch 1, ferner umfassend:
Beenden des Abfangens der Übertragung beim Detektieren wenigstens einer der Vielzahl von Mobilstationen (215), die mit einem Verlassen der Übertragung des geographischen Bereichs (235) assoziiert ist.

6. Verfahren nach Anspruch 1, wobei der geographische Bereich (235) mit wenigstens einem von einem Flughafen, einer diplomatischen Vertretung, einer Haftanstalt, einer Militärbasis und einem gesicherten Ort assoziiert ist.

7. Verfahren nach Anspruch 1, wobei ein Detektieren der Vielzahl von Mobilstationen (215) wenigstens eines umfasst von einem Detektieren eines Anrufs, der von wenigstens einer der Vielzahl von Mobilstationen (215) getätigt wird, Detektieren eines Anrufs, der von wenigstens einer der Vielzahl von Mobilstationen (215) empfangen wird, Detektieren einer Textnachricht, die von wenigstens einer der Vielzahl von Mobilstationen (215) gesendet wird, Detektieren einer Textnachricht, die von wenigstens einer der Vielzahl von Mobilstationen (215) empfangen wird, und Detektieren einer periodischen Ortsaktualisierung, die von wenigstens einer der Vielzahl von Mobilstationen (215) vorgenommen wird.

8. Verfahren nach Anspruch 7, wobei ein Detektieren des periodischen Ortsaktualisierens ein Empfangen von Ortsinformationen von einer mobilen Vermittlungsstelle (305) umfasst.

9. Verfahren nach Anspruch 1, wobei ein Detektieren der Übertragung ein Detektieren der Übertragung als von jeglicher der Vielzahl von Mobilstationen (215) stammend umfasst, die in dem geographischen Bereich (235) detektiert wurden.

10. Verfahren nach Anspruch 1, wobei ein Detektieren der Übertragung ein Detektieren der Übertragung als von jeglicher der Vielzahl von Mobilstationen (215) empfangen umfasst, die in dem geographischen Bereich (235) detektiert wurden.

11. Verfahren nach Anspruch 1, wobei ein Abfangen der Übertragung ein Abfangen von wenigstens einem von einer codierten menschlichen Sprache, einer Textnachricht, einem Übertragungsdatum, einer Übertragungszeit, einem Übertragungsort, von Daten, die eine Übertragungsquelle identifizieren, und von Daten, die einen beabsichtigten Empfänger (220) der Übertragung identifizieren, umfasst, und wobei ein Übertragen der Übertragung an wenigstens eine autorisierte Instanz (260) ein Übertragen von wenigstens einem von der codierten menschlichen Sprache, der Textnachricht, dem Übertragungsdatum, dem Übertragungsort, den Daten, die eine Übertragungsquelle identifizieren, und den Daten, die einen beabsichtigten Empfänger (220) der Übertragung identifizieren, umfasst.

12. Verfahren nach Anspruch 1, wobei ein Übertragen von wenigstens einem Abschnitt der Übertragung an die wenigstens eine autorisierte Instanz (260) ein Übertragen von wenigstens einem Abschnitt der Übertragung an wenigstens eine Strafverfolgungsüberwachungseinrichtung einschließt.

13. System zum auf einem geographischen Bereich (235) basierenden Abfangen von Datenübertragungen durch ein landseitiges Netzwerk (205), **gekennzeichnet durch**:
eine Empfangsvorrichtung (225), die mit einem Prozessor (230) assoziiert ist, zum Empfangen eines Befehls zum Abfangen von wenigstens einer Übertragung, die mit wenigstens einer von einer Vielzahl von Mobilstationen (215) assoziiert ist, die sich in einem geographischen Bereich (235) innerhalb eines Bereichs befinden, der von einem landseitigen Netzwerk (205) abgedeckt ist;
ein Identifizieren des geographischen Bereichs (235) durch den Prozessor (230), wobei der geographische Bereich ein Bereich ist, der einen Abschnitt von wenigstens zwei Zellabdeckungsbereichen (213) überlappt, die mit wenigstens einer Basisstation (210) assoziiert sind, die dem landseitigen Netzwerk (205) entspricht, und wobei der geographische Bereich (235) kleiner ist als jeder der wenigstens zwei Zellabdeckungsbereiche (213);
einen Detektor (240), der mit dem Prozessor (230) assoziiert ist, zum Detektieren einer Vielzahl von Mobilstationen (215), die sich in dem geographischen Bereich (235) befinden;
ein Detektieren durch den Detektor (240) einer Übertragung, die mit wenigstens einer der Vielzahl von Mobilstationen (215) in dem geographischen Bereich (235) assoziiert ist;
eine Abfangeinheit (245), die die Übertragung an einem Abfangzugriffspunkt (250) abfängt, wenn die Übertragung das landseitige Netzwerk (205) durchquert; und
einen Sender (255) zum Übertragen von wenigstens einem Abschnitt der Übertragung an wenigstens eine autorisierte Instanz (260).

14. Herstellungsgegenstand, der ein Programmspeichermedium umfasst, das einen computerlesbaren Programmcode zum auf einem geographischen Bereich (235) basierenden Abfangen von Datenübertragungen durch ein landseitiges Netzwerk (205) darin ausgebildet aufweist, wobei der computerlesbare Programmcode in dem Herstellungsgegenstand **gekennzeichnet ist durch**:
einen computerlesbaren Code, um einen Computer zu veranlassen, einen Befehl zum Abfangen von wenigstens einer Übertragung zu empfangen, die mit wenigstens einer von einer Vielzahl von Mobilstationen (215) assoziiert ist, die sich in einem geographischen Bereich (235) innerhalb eines Bereichs befindet, der von dem landseitigen Netzwerk (205) abgedeckt ist;
einen computerlesbarer Code, um einen Computer zu veranlassen, einen geographischen Bereich (235) zu definieren, wobei der geographische Bereich in einem Bereich liegt, der einen Abschnitt von wenigstens zwei Zellabdeckungsbereichen (213) überlappt, die mit wenigstens einer Basisstation (210) assoziiert sind, die dem landseitigen Netzwerk (205) entspricht, und wobei der geographische Bereich (235) kleiner ist als jeder der wenigstens zwei Zellabdeckungsbereiche (213) ;
einen computerlesbaren Code, um einen Computer zu veranlassen, eine Vielzahl von Mobilstationen (215) zu detektieren, wobei jede der Vielzahl von Mobilstationen (215) sich in dem geographischen Bereich (235) befindet;
einen computerlesbaren Code, um einen Computer zu veranlassen, eine Übertragung zu detektieren, die mit wenigstens einer der Vielzahl von Mobilstationen (215) in dem geographischen Bereich (235) assoziiert ist;
einen computerlesbaren Code, um einen Computer zu veranlassen, die Übertragung an einem Abfangzugriffspunkt (250) abzufangen, wenn die Übertragung das landseitige Netzwerk (205) durchquert; und
einen computerlesbaren Code, um einen Computer zu veranlassen, wenigstens einen Abschnitt der Übertragung an wenigstens eine autorisierte Instanz (260) zu übertragen.

## Revendications

1. Procédé pour l'interception des transmissions de données liées à un emplacement géographique (235) à travers un réseau terrestre (205), **caractérisé par** :
la réception d'une commande pour intercepter au moins une transmission associée à au moins une d'une pluralité de stations mobiles (215) localisée dans un emplacement géographique (235) à l'intérieur d'une zone couverte par le réseau terrestre (205) ;
l'identification de l'emplacement géographique (235), dans lequel l'emplacement géographique (235) est un emplacement qui chevauche une partie d'au moins deux zones de couverture cellulaire (213) associées à au moins une station de base (210) correspondant au réseau terrestre (205), et dans lequel l'emplacement géographique (235) est plus petit que chacune de l'au moins deux zones de couverture cellulaire (213) ;
la détection de la pluralité des stations mobiles (215), chacune de la pluralité de stations mobiles (215) étant localisée dans l'emplacement géographique (235) ;
la détection d'une transmission associée à l'au moins une de la pluralité de stations mobiles (215) dans l'emplacement géographique (235) ;
l'interception de la transmission au niveau d'un point d'accès d'interception (250) lorsque la transmission passe à travers le réseau terrestre (205) ; et
la transmission d'au moins une partie de la transmission vers au moins une entité autorisée (260).

2. Procédé selon la revendication 1, comprenant également :
l'identification d'au moins une de la pluralité de stations mobiles (215) comme station mobile ciblée (265) localisée dans l'emplacement géographique (235), dans lequel l'interception de la transmission comprend l'interception d'une transmission associée à la station mobile ciblée (265) lorsque la station mobile ciblée (265) est localisée dans l'emplacement géographique (235) ; et
la terminaison de l'interception de la transmission associée à la station mobile ciblée (265) lorsque la station mobile ciblée (265) est localisée à l'extérieur de l'emplacement géographique (235).

3. Procédé de la revendication 1, comprenant également :
l'identification, à partir de la pluralité de stations mobiles (215), d'une première station mobile ciblée (265) et d'une seconde station mobile ciblée (265),
dans lequel l'interception de la transmission comprend l'interception d'une transmission associée à au moins une de la première station mobile ciblée (265) et de la seconde station mobile ciblée (265) lorsque au moins une de la première station mobile ciblée (265) et de la seconde station mobile ciblée (265) est localisée dans l'emplacement géographique (235), et lorsque la distance entre la première station mobile ciblée (265) et la seconde station mobile ciblée (265) est inférieure à une distance prédéterminée.

4. Procédé selon la revendication 1, comprenant également :
l'identification, à partir de la pluralité de stations mobiles (215), d'une première station mobile ciblée (265) ; et l'identification d'un objet de référence (270) localisé dans l'emplacement géographique (235),
dans lequel l'interception de la transmission comprend l'interception d'une transmission associée à la première station mobile ciblée (265) lorsque la première station mobile ciblée (265) est localisée dans l'emplacement géographique (235) et lorsque la première station mobile ciblée (265) est localisée à l'intérieur d'une distance prédéterminée de l'objet de référence (270).

5. Procédé selon la revendication 1, comprenant également :
la terminaison de l'interception de la transmission lors de la détection de l'au moins une de la pluralité des stations mobiles (215) associée à la transmission sortant de l'emplacement géographique (235).

6. Procédé selon la revendication 1, dans lequel l'emplacement géographique (235) est associé à au moins un d'un aéroport, d'un complexe diplomatique, d'un centre de détention, d'une base militaire et d'un emplacement sécurisé.

7. Procédé selon la revendication 1, dans lequel la détection de la pluralité de stations mobiles (215) comprend au moins l'une de la détection d'un appel composé à partir de l'au moins une de la pluralité de stations mobiles (215), la détection d'un appel reçu par l'au moins une de la pluralité de stations mobiles (215), la détection d'un message texte envoyé à partir de l'au moins une de la pluralité de stations mobiles (215), la détection d'un message texte reçu par l'au moins une de la pluralité des stations mobiles (215), et la détection d'une actualisation d'emplacement périodique réalisée par l'au moins une de la pluralité de stations mobiles (215).

8. Procédé selon la revendication 7, dans lequel la détection de l'actualisation de l'emplacement périodique comprend la réception d'informations d'emplacement provenant d'un centre de commutation mobile (305).

9. Procédé selon la revendication 1, dans lequel la détection de la transmission comprend la détection de la transmission provenant d'une quelconque de la pluralité de stations mobiles (215) détectée dans l'emplacement géographique (235).

10. Procédé selon la revendication 1, dans lequel la détection de la transmission comprend la détection de la transmission qui est reçue par une quelconque de la pluralité de stations mobiles (215) détectée dans l'emplacement géographique (235).

11. Procédé selon la revendication 1, dans lequel l'interception de la transmission comprend l'interception d'au moins l'un d'une parole humaine codée, d'un message texte, d'une date de transmission, d'une heure de transmission, d'un emplacement de transmission, de données identifiant une source de la transmission et de données identifiant un destinataire prévu (220) de la transmission, et
dans lequel la transmission de la transmission vers l'au moins une entité autorisée (260) comprend la transmission d'au moins un de la parole humaine codée, du message texte, de la date de transmission, de l'heure de transmission, de l'emplacement de transmission, des données identifiant une source de la transmission et des données identifiant un destinataire prévu (220) de la transmission.

12. Procédé selon la revendication 1, dans lequel la transmission d'au moins une partie de la transmission vers l'au moins une entité autorisée (260) comprend la transmission d'au moins une partie de la transmission vers au moins une instance de surveillance de l'application de la loi.

13. Système pour interception des transmissions de données liées à un emplacement géographique (235) à travers un réseau terrestre (205), **caractérisé par** :
un récepteur (225) associé à un processeur (230) pour recevoir une commande pour intercepter au moins une transmission associée à au moins une d'une pluralité de stations mobiles (215) localisée dans un emplacement géographique (235) à l'intérieur d'une zone couverte par le réseau terrestre (205) ;
le processeur (230) identifiant l'emplacement géographique (235), dans lequel l'emplacement géographique est un emplacement qui chevauche une partie d'au moins deux zones de couverture cellulaire (213) associées à au moins une station de base (210) correspondant au réseau terrestre (205), et dans lequel l'emplacement géographique (235) est plus petit que chacune de l'au moins deux zones de couverture cellulaire (213) ;
un détecteur (240) associé au processeur (230) pour détecter la pluralité de stations mobiles (215) localisée dans l'emplacement géographique (235) ;
le détecteur (240) détecte une transmission associée à l'au moins une de la pluralité de stations mobiles (215) dans l'emplacement géographique (235) ;
une unité d'interception (245) interceptant la transmission au niveau d'un point d'accès d'interception (250) lorsque la transmission passe à travers le réseau terrestre (205) ; et
un émetteur (255) pour transmettre au moins une partie de la transmission vers au moins une entité autorisée (260).

14. Article de fabrication comprenant un support de stockage de programme ayant un code de programme lisible par ordinateur intégré dans celui-ci pour l'interception de transmissions de données basée sur une zone géographique (235) à travers un réseau terrestre (205), le code de programme lisible par ordinateur dans l'article de fabrication étant **caractérisé par** :
un code lisible par ordinateur pour permettre à un ordinateur de recevoir une commande pour intercepter au moins une transmission associée à au moins une d'une pluralité de stations mobiles (215) localisée dans un emplacement géographique (235) à l'intérieur d'une zone couverte par le réseau terrestre (205) ;
un code lisible par ordinateur pour permettre à l'ordinateur de définir l'emplacement géographique (235), dans lequel l'emplacement géographique est un emplacement qui chevauche une partie d'au moins deux zones de couverture cellulaire (213) associées à au moins une station de base (210) correspondant au réseau terrestre (205), et dans lequel l'emplacement géographique (235) est plus petit que chacune de l'au moins deux zones de couverture cellulaire (213) ;
un code lisible par ordinateur pour permettre à l'ordinateur de détecter la pluralité des stations mobiles (215), chacune de la pluralité de stations mobiles (215) étant localisée dans l'emplacement géographique (235) ;
un code lisible par ordinateur pour permettre à l'ordinateur de détecter une transmission associée à l'au moins une de la pluralité de stations mobiles (215) dans l'emplacement géographique (235) ;
un code lisible par ordinateur pour permettre à l'ordinateur d'intercepter la transmission au niveau d'un point d'accès d'interception (250) lorsque la transmission passe à travers le réseau terrestre (205) ; et
un code lisible par ordinateur pour permettre à l'ordinateur de transmettre au moins une partie de la transmission vers au moins une entité autorisée (260).
